# EUROPÄISCHE PATENTSCHRIFT

(11) **EP 2 998 591 B1**
(45) Veröffentlichungstag und Bekanntmachung des Hinweises auf die Patenterteilung: **17.05.2017**
(21) Anmeldenummer: 15185050.0
(22) Anmeldetag: 14.09.2015
(51) Int. Cl.: F16B 7/04, E04C 3/28, F16B 7/18

(54) **VERBINDUNGSELEMENT**
CONNECTING ELEMENT
ÉLEMENT DE LIAISON

(30) Priorität: 17.09.2014 AT 506542014
(43) Veröffentlichungstag der Anmeldung: 23.03.2016
(73) Patentinhaber: Teufelberger Composite Ges.mb.H., 4602 Wels (AT)
(72) Erfinder: KIRCHBERGER, Herwig, 4470 Enns (AT); STOFF, Jann, 4645 Grünau im Almtal (AT)
(74) Vertreter: Schwarz & Partner Patentanwälte OG

(56) Entgegenhaltungen:
- US-A1- 2010 005 752

## Beschreibung

Die vorliegende Erfindung betrifft ein Verbindungselement zur Einleitung von Querkräften. Insbesondere betrifft die Erfindung ein Verbindungselement zur Verwendung in Fachwerkstrukturen in Leichtbauweise.

Es existieren zahlreiche Veröffentlichungen für Verbindungselemente für Fachwerkstrukturen, im folgenden auch "Fachwerksknoten" genant. Dabei werden die (im wesentlichen parallel zueinanderlaufenden) Hauptgurte mit Verbindungselementen versehen, welche mit Querstreben verbunden werden können, welche wiederum mit dem nächsten Hauptgurt verbunden werden.

Die meisten dieser Veröffentlichungen beziehen sich auf Knoten, welche die Hauptgurte unterbrechen, siehe z.B. die von der Firma Mero angebotenen Verbindungsknoten. Dadurch werden allerdings zusätzliche Biegemomente in die Struktur eingebracht, welche die Gesamtstruktur schwächen.

Aus der Internetseite der Fa. CST Composite (http://www.cstcomposites.com/markets/aerospace-defence, abgerufen am 16.09.2014) ist ein Verbindungselement in Form einer zylindrischen Manschette bekannt. Die Manschette ist auf dem Hauptgurt angebracht, ohne dass dieser unterbrochen wird. Die Manschette weist auf ihrem Umfang ein Krafteinleitungselement auf, mittels welchem Querstreben mit dem Hauptgurt verbunden werden können. Sowohl die Manschette als auch das Krafteinleitungselement dieses Standes der Technik sind aus Metall. Ein weiteres Verbindungselement mit einer zylindrischen Manschette ist aus US 2010/0005752 A1 bekannt. Der Einsatz von metallischen Knotenelementen in Fachwerkstrukturen in Leichtbauweise hat den Nachteil des zusätzlichen Gewichtseintrags, einer je nach Metallart eingeschränkten Korrosionsbeständigkeit sowie einer unterschiedlichen Wärmeausdehnung zu insbesonderen faserverstärkten Kunststoffen.

Die Erfindung setzt sich zur Aufgabe, ein Verbindungselement zur Einleitung von Querkräften zur Verfügung zu stellen, welches ebenfalls keine Unterbrechung der Hauptgurte für die Einleitung von Querkräften bedingt und bei welchem der Einsatz von Metall auf ein Minimum beschränkt wird.

Diese Aufgabe wird durch ein Verbindungselement zur Einleitung von Querkräften insbesondere in Fachwerkstrukturen in Form einer um ein längliches Element aufbringbaren Manschette mit zumindest einer am Umfang der Manschette angeordneten bevorzugt metallischen Krafteinleitungskomponente gelöst, wobei die Krafteinleitungskomponente einen erhabenen Abschnitt mit zumindest einer Anbindungsstelle zur Verbindung mit weiteren Elementen und einen flachen Abschnitt, der an den erhabenen Abschnitt in Längsrichtung der Manschette und/oder in Umfangsrichtung der Manschette angrenzt, aufweist, und welche dadurch gekennzeichnet ist, dass die Manschette im wesentlichen aus einer ersten Schicht aus Faserverbundmaterial und einer zweiten Schicht aus Faserverbundmaterial, welche zumindest einen Teil der Krafteinleitungskomponente und der ersten Schicht aus Faserverbundmaterial zusammen ummantelt und damit die Krafteinleitungskomponente mit der ersten Schicht verbindet, aufgebaut ist.

Bevorzugte Ausführungsformen der vorliegenden Erfindung sind in den Unterannsprüchen angeführt.

### Kurze Beschreibung der Figuren

Fig. 1 zeigt einen Querschnitt durch eine Ausführungsform des erfindungsgemäßen Verbindungselementes in Längsrichtung des Elementes.
Fig. 2 zeigt einen Querschnitt in Querrichtung des Elementes.
Fig. 3 zeigt eine Aufsicht auf ein erfindungsgemäßes Verbindungselement.
Fig. 4 zeigt einen Querschnitt (in Querrichtung) einer weiteren Ausführungsform des erfindungsgemäßen Verbindungselementes.
Fig. 5 und Fig. 6 zeigen eine Ausführungsform eines aus zwei Teilen bestehenden Verbindungselementes.
Fig. 7 zeigt eine Aufsicht einer weiteren Ausführungsform eines aus zwei Teilen bestehenden Verbindungselementes.

### Detaillierte Beschreibung der Erfindung

Gemäß der vorliegenden Erfindung wird ein Verbindungselement in Form einer Manschette zur Verfügung gestellt, welche im wesentlichen aus einer ersten Schicht aus Faserverbundmaterial und einer zweiten Schicht aus Faserverbundmaterial, welche zumindest einen Teil der Krafteinleitungskomponente und der ersten Schicht aus Faserverbundmaterial zusammen ummantelt und damit die Krafteinleitungskomponente mit der ersten Schicht verbindet, aufgebaut ist.

Der Begriff "im wesentlichen aufgebaut" bedeutet dabei, dass die Form der Manschette und ihre Verbindung mit dem Krafteinleitungselement im wesentlichen durch die beiden Schichten aus Faserverbundmaterial definiert wird. Das Vorhandensein weiterer Bestandteile, wie z.B. weiter unten beschrieben, ist durch diesen Begriff nicht ausgeschlossen.

Die erfindungsgemäße Manschette besteht somit abgesehen von der gegebenenfalls metallischen Krafteinleitungskomponente zu einem Großteil aus Faserverbundmaterial und ist damit besonders gut für Leichtbaustrukturen geeignet. Durch den erfindungsgemäßen Aufbau mit zwei Schichten aus Faserverbundmaterial, wobei die zweite Schicht durch Ummantelung die Krafteinleitungskomponente mit der ersten Schicht verbindet, ist eine stabile, den jeweiligen Anforderungen genügende Struktur gewährleistet.

Die Krafteinleitungskomponente besteht aus einem erhabenen Abschnitt und zumindest einem an den erhabenen Abschnitt angrenzenden flachen Abschnitt. Der flache Abschnitt kann an den erhabenen Abschnitt in Längsrichtung und/oder in Umfangsrichtung der Manschette angrenzen. Gegebenenfalls kann der flache Abschnitt den gesamten erhabenen Abschnitt umgeben. Bevorzugt sind zumindest zwei flache Abschnitte vorgesehen, die an den erhabenen Abschnitt jeweils an zwei gegenüberliegenden Seiten, besonders bevorzugt jeweils in Längsrichtung der Manschette, angrenzen. Im Folgenden umfasst der Ausdruck "flacher Abschnitt" in Einzahl auch mehrere flache Abschnitte.

Bevorzugt verbindet die zweite Schicht aus Faserverbundmaterial die Krafteinleitungskomponente zumindest in einem Teilbereich des flachen Abschnittes mit der ersten Schicht aus Faserverbundmaterial.

Besonders bevorzugt ummantelt die zweite Schicht aus Faserverbundmaterial die Krafteinleitungskomponente zur Gänze. Ebenso kann die gesamte freiliegende erste Schicht zur Gänze ummantelt sein.

In einer weiteren bevorzugten Ausführungsform weist das erfindungsgemäße Verbindungselement zumindest in einem Teil jenes Bereiches, der mittels der zweiten Schicht aus Faserverbundmaterial mit der ersten Schicht aus Faserverbundmaterial verbunden ist, stiftförmige Vorsprünge auf, wobei die stiftförmigen Vorsprünge zumindest in eine Schicht des Faserverbundmaterials hineinragen.

Aus der WO 2009/003207 ist ein Krafteinleitungselement bekannt, welches mit einem Faserverbundmaterial ummantelt ist und welches an zumindest einem Abschnitt an seiner dem Faserverbundmaterial zugewandten Außenfläche insbesondere stiftförmige Vorsprünge vorgesehen sind, die das Faserverbundmaterial zumindest teilweise durchdringen.

Ein ähnliches Prinzip wird in der bevorzugten Ausführungsform der vorliegenden Erfindung zur besseren Verbindung der Krafteinleitungskomponente mit dem Faserverbundmaterial der ersten und/oder zweiten Schicht eingesetzt. Die Geometrie der Vorsprünge sowie die Dichte der Anordnung der Vorsprünge kann dabei vom Fachmann je nach zu erwartender Belastung des Verbindungselementes gewählt werden. Zu Details über mögliche Anordnungen der Vorsprünge und deren Herstellung wird auf die Lehre der WO 2009/003207 verwiesen.

Die stiftförmigen Vorsprünge können aus der Krafteinleitungskomponente nach außen in die zweite Schicht aus Faserverbundmaterial oder nach innen in die erste Schicht aus Faserverbundmaterial hineinragen. Besonders bevorzugt ragen die Vorsprünge in beide Schichten hineien.

Insbesondere können die stiftförmigen Vorsprünge zumindest in einem Bereich des flachen Abschnittes der Krafteinleitungskomponente vorgesehen sein und an der Oberseite des flachen Abschnittes in die zweite Schicht des Faserverbundmaterials sowie an der Unterseite des flachen Abschnittes in die erste Schicht des Faserverbundmaterials hineinragen.

Der erhabene Abschnitt der Krafteinleitungskomponente kann bevorzugt im wesentlichen trapezförmig ausgestaltet sein. An den trapezförmigen erhabenen Abschnitt grenzen bevorzugt in Längsrichtung der Manschette zwei flache Abschnitte an. Es ergibt sich dabei eine im wesentlichen hutförmige Form der Krafteinleitungskomponente mit einem flossenartigen erhabenen Abschnitt.

Die Krafteinleitungskomponente weist zumindest eine Anbindungsstelle, wie z.B. eine Bohrung, zur Verbindung mit weiteren Elementen auf. Bevorzugt sind mehrere Anbindungsstellen vorgesehen.

Weiters bevorzugt können je nach Art der Fachwerkstruktur und der Anzahl der Querverstrebungen am Umfang der Manschette mehrere Krafteinleitungskomponenten, z.B. vier Komponenten in einem Winkel von 0°, 90°, 180° und 270° vorgesehen werden.

Die auslaufenden Enden des flachen Abschnittes der Krafteinleitungskomponente können bevorzugt trapez- bzw. keilförmig ausgestaltet sein, um beim Tränken des Vorproduktes aus den beiden Fasermaterialschichten mit Harz Harznester zu vermeiden.

Das Fasermaterial der ersten Schicht aus Faserverbundmaterial liegt bevorzugt in Form von triaxialen Fasergeflechtslagen vor, die übereinander geschichtet sind. Eine Lage besteht dabei aus drei in jeweils verschiedenen Orientierungen vorliegenden Fasersystemen, die miteinander verflochten sind.

Die triaxiale Fasergeflechtslagen enthalten bevorzugt jeweils Fasern mit einem Flechtwinkel von im wesentlichen 0° gegenüber der Längsrichtung der Manschette sowie Fasern mit einem Flechtwinkel von 25° bis 85° gegenüber der Längsrichtung der Manschette. Die Fasern mit einem Flechtwinkel vom im wesentlichen 0° gegenüber der Längsachse der Manschette können hohe Biegekräfte bezogen auf die Längsachse des Krafteinleitungselementes aufnehmen. Weiters sind zwei weitere Fasersysteme mit Flechtfasern mit einem Flechtwinkel von jeweils zwischen 25°-85° gegenüber der Längsrichtung der Manschette vorgesehen, wobei hohe Flechtwinkel tendenziell günstiger sind, um das Krafteinleitungselement gegen Einbeulen aufgrund hoher lokaler Druckkräfte durch die Einleitung von Querkräften zu schützen. Weiters ist aus Veröffentlichungen zu triaxialen Geflechtaufbauten bekannt, dass solche Faserarchitekturen besonders hohe Schadenstoleranzen aufweisen. Dies trägt zusätzlich zur Belastbarkeit des Krafteinleitungselementes bei.

Das Fasermaterial der zweiten Schicht aus Faserverbundmaterial ist bevorzugt aus partiellen Kreuzwicklungen oder Flechtlagen aufgebaut.

Der Faserwinkel der Wickellagen bzw. der Flechtlagen beträgt bevorzugt von 45° bis 89°. Hohe Faserwinkel in der zweiten Schicht aus Faserverbundmaterial sind günstig, um das zwischen erster und zweiter Schicht aus Faserverbundmaterial befindliche Krafteinleitungselement bei hohen Zugkräften durch die Einleitung von Querkräften sicher einzubetten. Dies kann durch partielle Kreuzwicklungen (>85° mit Braider-Winder) bzw. Flechtlagen mit entsprechend hohem Faserwinkeln einfach realisiert werden.

Die für die Herstellung der beiden Schichten aus Faserverbundmaterial einzusetzenden Fasermaterialien sowie Harze können vom Fachmann aus den für diesen Anwendungsbereich üblichen Materialien ausgewählt werden. Als Beispiele für Fasern sind Kohlefasern, Glasfasern, Aramidfasern, Basaltfasern zu nennen, als Harze sind duroplastische Reaktivharze wie Epoxidharze zu nennen.

In einer weiteren bevorzugten Ausführungsform ist zumindest in einem Teil des Bereiches der Manschette, in dem kein Krafteinleitungselement vorgesehen ist, zwischen der ersten Schicht und der zweiten Schicht aus Verbundmaterial eine Ausgleichschicht vorgesehen.

Damit kann insbesondere die Höhendifferenz zwischen dem flachen Abschnitt der Krafteinleitungskomponente und der ersten Schicht aus Faserverbundmaterial ausgeglichen werden und somit lokale Spannungsspitzen in der zweiten Schicht aus Faserverbundmaterial verhindert werden. Bevorzugt entspricht somit die Dicke der Ausgleichschicht der Höhe des flachen Abschnittes.

Im Falle mehrerer am Umfang der Manschette angeordneter Krafteinleitungskomponenten kann die Ausgleichschicht bevorzugt in Umfangrichtung zwischen den Krafteinleitungskomponenten auf die erste Schicht aufgelegt werden.

Das Material der Ausgleichschicht kann aus üblichen Sandwichmaterialien, z.B. Schaummaterialien der Fa. 3D-Core, ausgewählt werden.

Bevorzugt weist die Manschette eine im wesentlichen zylindrische Querschnittsform auf. Es sind aber in Abhängigkeit vom Querschnitt der zu ummantelnden Hauptgurte auch andere Querschnittsformen, wie z.B. quadratisch oder rechteckig, denkbar.

Zur Fixierung der erfindungsgemäßen Manschette am Hauptgurt kann diese einfach auf den Gurt aufgeschoben werden und dort auf geeignete Weise, z.B. mittels Keilen, fixiert und verspannt werden, um das Auftreten von Biegemomenten hintanzuhalten.

In einer weiteren bevorzugten Ausführungsform besteht die Manschette aus zumindest zwei miteinander kraftschlüssig in Verbindung bringbaren Teilen. Diese Ausführungsform ist insbesondere dann von Vorteil, wenn der Hauptgurt variierende Durchmesser, z.B. Aufweitungen, aufweist und ein einfaches Aufschieben auf den Gurt schwierig wäre.

Bei dieser vorteilhaften Ausführungsform ist die Manschette bevorzugt in der Ebene zumindest eines der Krafteinleitungselemente geteilt. Man kann dann die geteilte Manschette um den Hauptgurt legen und die Teile im Bereich der erhabenen Abschnitte des oder der Krafteinleitungselemente z.B. mittels Schrauben miteinander verbinden. Zusätzlich oder alternativ dazu können die Teile im Bereich des flachen Abschnittes oder auch an anderen Stellen der Manschette über den gesamten Umfang mit z.B. Spannringen verbunden werden. Diese Spannringe übernehmen dann im Wesentlichen die Funktion der zweiten Schicht aus Faserverbundmaterials, da ja die lasttragende Funktion dieser Schicht durch das Auftrennen der Manschette nicht mehr gegeben ist.

Dabei können die flachen Abschnitte des Krafteinleitungselement auch derart ausgestaltet sein, dass diese beiderseits von der Teilungsebene der Manschette wegführend, z.B. spinnenförmig in die zwischen den Krafteinleitungselementen befindlichen Bereiche, eingebettet zwischen erster und zweiter Schicht aus Faserverbundmaterial, hineinragen.

Zur Herstellung des erfindungsgemäßen Verbindungselementes dient ein Verfahren, umfassend die Schritte:
- Herstellung einer ersten Schicht aus Fasermaterial in Form einer Manschette auf einem Kern
- Aufbringung zumindest eines Krafteinleitungselementes am Umfang der ersten Schicht
- Ummantelung zumindest eines Teiles des Krafteinleitungselementes und der ersten Schicht mit einer weiteren Schicht aus Fasermaterial
- Tränken der erhaltenen Struktur mit Harz
- Aushärten
- Entformen des Kerns

Der Kern ist in an sich bekannter Weise aus einem stabilen Material gebildet und hat eine der Endform der Manschette nahe Form.

In der bevorzugten Ausführungsform des Verbindungselementes mit einer Ausgleichschicht wird nach dem Aufbringen des oder der Krafteinleitungselemente das Material der Ausgleichschicht (z.B. ein Sandwichmaterial) in den Bereichen, in denen kein Krafteinleitungselement angeordnet ist, auf die erste Schicht aus Fasermaterial aufgebracht. Das Aushärten der hybriden Composite-Metall-Composite Struktur kann vorteilhafterweise in einem geeigneten RTM-Werkzeug bzw. bei geringen Stückzahlen auch durch ein Vakuuminfusionsverfahren realisiert werden.

Bevorzugte Ausführungsformen der vorliegenden Erfindung werden im Folgenden anhand der Figuren näher erläutert:

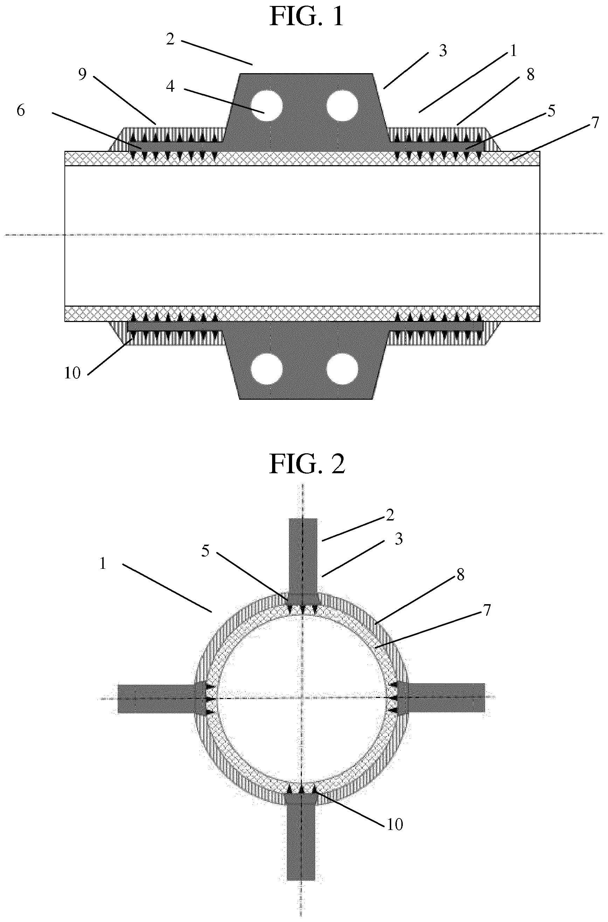

Figur 1 zeigt einen Querschnitt durch das erfindungsgemäße Verbindungselement 1 in Längsrichtung des Elementes, Figur 2 einen Querschnitt in Querrichtung des Elementes.

Die Manschette 1 des Verbindungselementes ist zunächst aus einer ersten Schicht 7 aus Faserverbundmaterial aufgebaut, deren Geometrie an die eines zu ummantelnden Hauptgurtes (nicht dargestellt) angepasst ist und im Umfang geringfügig größer als der des Hauptgurtes ist, um ein Aufschieben auf den Hauptgurt zu ermöglichen. Die hier beschriebene Ausführungsform zeigt eine zylindrische Manschette. Auf die erste Schicht 7 ist zumindest ein Krafteinleitungselement 2 aufgesetzt. In der in Figur 1 und Figur 2 dargestellten Ausführungsform sind in Umfangsrichtung gleichmäßig (d.h. im Abstand von 90°) vier Krafteinleitungselemente angeordnet.

Das Krafteinleitungselement 2 weist einen erhabenen Abschnitt 3 sowie zwei an den erhabenen Abschnitt 3 in Längsrichtung der Manschette angrenzende flache Abschnitte 5 und 6 auf. Im erhabenen Abschnitt ist zumindest eine Anbindungsstelle 4, in der gezeigten Ausführungsform in Form von einer bzw. mehreren Bohrungen, vorgesehen.

Erste Schicht 7 und das Krafteinleitungselement 2 werden in der gezeigten Ausführungsform im Bereich der flachen Abschnitte 5,6 von einer zweiten Schicht 8,9 aus Faserverbundmaterial ummantelt und damit miteinander verbunden.

Zur Verbesserung der Verbindung von erster Schicht 7, Krafteinleitungselement 2 und zweiter Schicht 8,9 sind im Bereich der flachen Abschnitte 5,6 Vorsprünge 10 vorgesehen, die in der dargestellten Ausführungsform vom Krafteinleitungselement 2 sowohl in die erste Schicht 7 hinein als auch in die zweite Schicht 8,9 hinausragen.

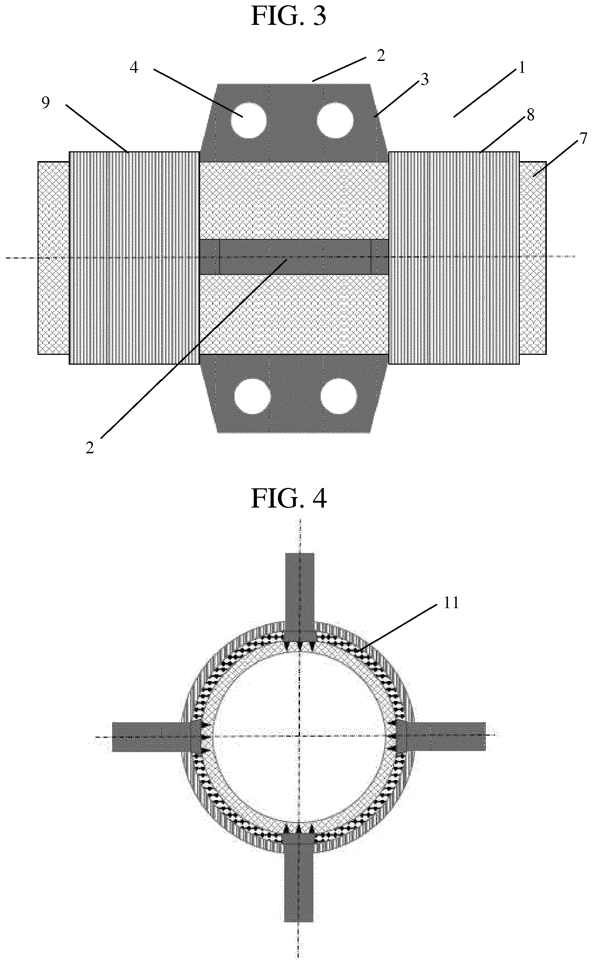

Figur 3 zeigt eine Aufsicht auf das fertiggestellte Verbindungselement. In der dargestellten Ausführungsform ummantelt die zweite Schicht 8,9 das Krafteinleitungselement 2 und die erste Schicht 7 lediglich im Bereich der flachen Abschnitte des Krafteinleitungselementes 2. Es ist aber auch eine vollständige Ummantelung des gesamten Krafteinleitungslementes 2 sowie der gesamten freiliegenden ersten Schicht 7 möglich.

Figur 4 zeigt den Querschnitt (in Querrichtung) einer weiteren bevorzugten Ausführungsform des Verbindungselementes 1, bei welchem in Umfangsrichtung zwischen den Krafteinleitungselementen eine Ausgleichschicht 11 zwischen der ersten Schicht und der zweiten Schicht aus Faserverbundmaterial vorgesehen ist.

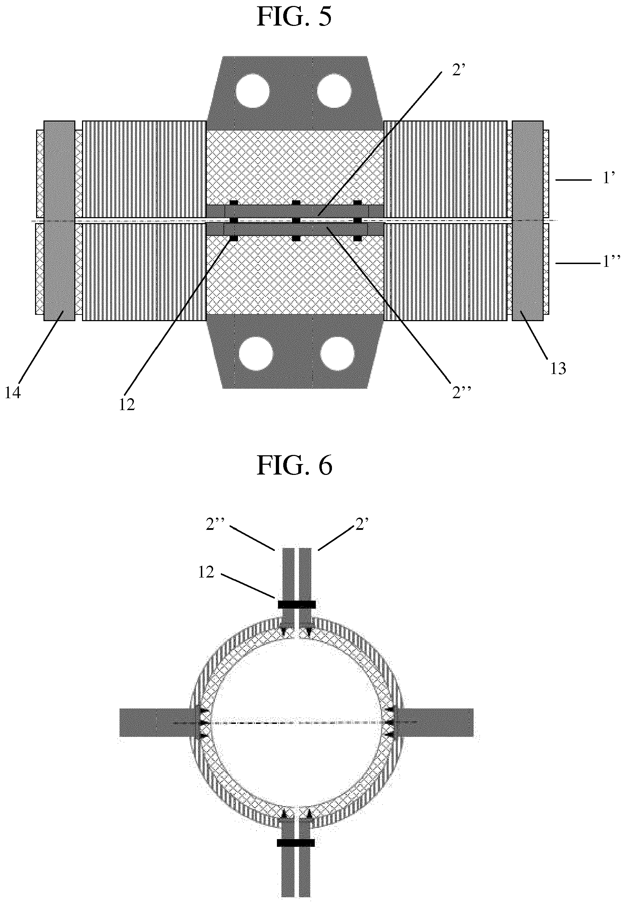

Die Figuren 5 und 6 zeigen eine Ausführungsform einer aus zwei Teilen bestehenden Manschette. Die Manschette ist dabei in der Ebene von zwei gegenüberliegenden Krafteinleitungselementen in zwei Teile 1',1" geteilt. Es liegen damit zweiteilige Krafteinleitungselemente 2',2" vor, die nach Aufbringen der Manschette auf den Gurt im Bereich des erhabenen Abschnittes mittels nicht näher dargestellter Verbindungen 12 miteinander verbunden werden können. Zusätzlich dazu können Spannringe 13, 14 vorgesehen sein, mit welcher die beiden Teile der Manschette 1',1" über den gesamten Umfang verbunden werden.

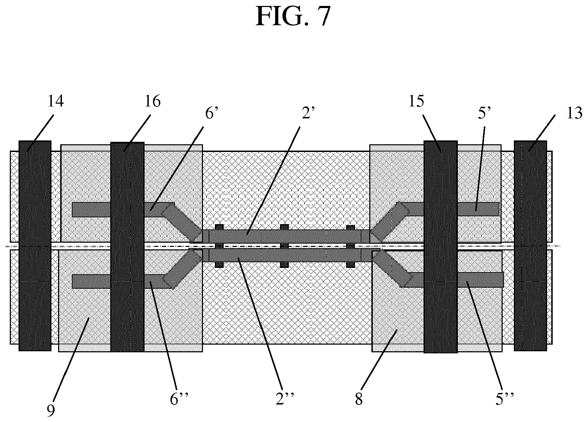

Figur 7 zeigt die Aufsicht einer besonderen Ausführungsform der flachen Abschnitte 5',5" und 6',6" einer aus zwei Teilen bestehenden Manschette mit nur einem geteilten Krafteinleitungselement 2',2". Die zweite Schicht 8,9 aus Faserverbundmaterial ist dabei transparent dargestellt. Die flachen Abschnitte 5',5" und 6',6" ragen in dieser Ausführungsform z.B. spinnenförmig weiter in die Bereiche zwischen den Krafteinleitungselementen hinein, um bei einer geteilten Ausführung höhere Kräfte über das geteilte Krafteinleitungselement übertragen zu können. Die Verbindung der geteilten Manschette für eine Fixierung auf dem Gurt ist nur schematisch mittels Spanngurten 13, 14, 15 und 16 dargestellt.

## Patentansprüche

1. Verbindungselement (1) zur Einleitung von Querkräften insbesondere in Fachwerkstrukturen in Form einer um ein längliches Element aufbringbaren Manschette (1) mit zumindest einer am Umfang der Manschette angeordneten bevorzugt metallischen Krafteinleitungskomponente (2), wobei die Krafteinleitungskomponente (2) einen erhabenen Abschnitt (3) mit zumindest einer Anbindungsstelle (4) zur Verbindung mit weiteren Elementen und einen flachen Abschnitt (5,6), der an den erhabenen Abschnitt in Längsrichtung der Manschette und/oder in Umfangsrichtung der Manschette angrenzt, aufweist, **dadurch gekennzeichnet, dass** die Manschette im wesentlichen aus einer ersten Schicht (7) aus Faserverbundmaterial und einer zweiten Schicht (8,9) aus Faserverbundmaterial, welche zumindest einen Teil der Krafteinleitungskomponente (2) und der ersten Schicht aus Faserverbundmaterial (7) zusammen ummantelt und damit die Krafteinleitungskomponente (2) mit der ersten Schicht (7) verbindet, aufgebaut ist.

2. Verbindungselement gemäß Anspruch 1, **dadurch gekennzeichnet, dass** die zweite Schicht (8,9) aus Faserverbundmaterial die Krafteinleitungskomponente (2) zumindest in einem Teilbereich des flachen Abschnittes (5,6) mit der ersten Schicht (7) aus Faserverbundmaterial verbindet.

3. Verbindungselement gemäß Anspruch 1 oder 2, **dadurch gekennzeichnet, dass** die Krafteinleitungskomponente (2) zumindest in einem Teil jenes Bereiches, der mittels der zweiten Schicht (8,9) aus Faserverbundmaterial mit der ersten Schicht (7) aus Faserverbundmaterial verbunden ist, stiftförmige Vorsprünge (10) aufweist, wobei die stiftförmigen Vorsprünge zumindest in eine Schicht (7,8,9) des Faserverbundmaterials hineinragen.

4. Verbindungselement gemäß Anspruch 3, **dadurch gekennzeichnet, dass** die stiftförmigen Vorsprünge (10) zumindest in einem Bereich des flachen Abschnittes (5,6) vorgesehen sind und an der Oberseite des flachen Abschnittes (5,6) in die zweite Schicht des Faserverbundmaterials (8,9) sowie an der Unterseite des flachen Abschnittes (5,6) in die erste Schicht (7) des Faserverbundmaterials hineinragen.

5. Verbindungselement gemäß einem der vorherigen Ansprüche, **dadurch gekennzeichnet, dass** der erhabene Abschnitt (3) im wesentlichen trapezförmig ausgestaltet ist.

6. Verbindungselement gemäß einem der vorherigen Ansprüche, **dadurch gekennzeichnet, dass** das Fasermaterial der ersten Schicht aus Faserverbundmaterial (7) in Form von triaxialen Fasergeflechtslagen vorliegt.

7. Verbindungselement gemäß Anspruch 6, **dadurch gekennzeichnet, dass** die triaxialen Fasergeflechtslagen Fasern mit einem Flechtwinkel von im wesentlichen 0° gegenüber der Längsrichtung der Manschette sowie Fasern mit einem Flechtwinkel von 25° bis 85° gegenüber der Längsrichtung der Manschette aufweisen.

8. Verbindungselement gemäß einem der vorherigen Ansprüche, **dadurch gekennzeichnet, dass** das Fasermaterial der zweiten Schicht (8,9) aus Faserverbundmaterial aus partiellen Kreuzwicklungen oder Flechtlagen aufgebaut ist.

9. Verbindungselement gemäß Anspruch 8, **dadurch gekennzeichnet, dass** der Faserwinkel der Wickellagen bzw. der Flechtlagen von 45° bis 89° beträgt.

10. Verbindungselement gemäß einem der vorherigen Ansprüche, **dadurch gekennzeichnet, dass** zumindest in einem Teil des Bereiches der Manschette (1), in dem kein Krafteinleitungselement (2) vorgesehen ist, zwischen der ersten Schicht (7) und der zweiten Schicht (8,9) aus Faserverbundmaterial eine Ausgleichschicht (11) vorgesehen ist.

11. Verbindungselement gemäß einem der vorherigen Ansprüche, **dadurch gekennzeichnet, dass** die Manschette (1) eine im wesentlichen zylindrische Querschnittsform aufweist.

12. Verbindungselement gemäß einem der vorherigen Ansprüche, **dadurch gekennzeichnet, dass** die Manschette (1) aus zumindest zwei miteinander kraftschlüssig in Verbindung bringbaren Teilen besteht.

13. Verbindungselement gemäß Anspruch 12, **dadurch gekennzeichnet, dass** die Manschette (1',1") in der Ebene zumindest eines der erhabenen Abschnitte der Krafteinleitungselemente (2',2") geteilt ist.

14. Verfahren zur Herstellung des Verbindungselementes gemäß einem der vorherigen Ansprüche, umfassend die Schritte:
- Herstellung einer ersten Schicht aus Fasermaterial in Form einer Manschette auf einem Kern
- Aufbringung zumindest eines Krafteinleitungselementes am Umfang der ersten Schicht
- Ummantelung zumindest eines Teiles des Krafteinleitungselementes und der ersten Schicht mit einer weiteren Schicht aus Fasermaterial
- Tränken der erhaltenen Struktur mit Harz und
- Aushärten
- Entformen des Kerns.

## Claims

1. A connecting element (1) for the introduction of transverse forces, in particular in half-timbered structures in the form of a sleeve (1) attachable around an elongated element with at least one preferably metallic force introduction component (2) arranged at the periphery of the sleeve, with the force introduction component (2) having a raised portion (3) with at least one connection point (4) for the connection to further elements and a flat portion (5,6) adjacent to the raised portion in the longitudinal direction of the sleeve and/or in the circumferential direction of the sleeve, **characterized in that** the sleeve is essentially composed of a first layer (7) made of fiber composite material and a second layer (8,9) made of fiber composite material which coats at least part of the force introduction component (2) along with the first layer made of fiber composite material (7), thus connecting the force introduction component (2) to the first layer (7).

2. A connecting element according to claim 1, **characterized in that** the second layer (8,9) made of fiber composite material connects the force introduction component (2) at least in a partial area of the flat portion (5,6) to the first layer (7) made of fiber composite material.

3. A connecting element according to claim 1 or 2, **characterized in that** the force introduction component (2) comprises pin-shaped projections (10) at least in part of the region which is connected to the first layer (7) made of fiber composite material via the second layer (8,9) made of fiber composite material, the pin-shaped projections protruding at least into one layer (7,8,9) of the fiber composite material.

4. A connecting element according to claim 3, **characterized in that** the pin-shaped projections (10) are provided at least in a region of the flat portion (5,6) and protrude, on the top side of the flat portion (5,6), into the second layer of the fiber composite material (8,9) as well as, on the bottom side of the flat portion (5,6), into the first layer (7) of the fiber composite material.

5. A connecting element according to any of the preceding claims, **characterized in that** the raised portion (3) is shaped essentially in the form of a trapezoid.

6. A connecting element according to any of the preceding claims, **characterized in that** the fibre material of the first layer made of fiber composite material (7) is provided in the form of triaxial fibre network layers.

7. A connecting element according to claim 6, **characterized in that** the triaxial fibre network layers comprise fibres having a braid angle of essentially 0° relative to the longitudinal direction of the sleeve as well as fibers having a braid angle of from 25° to 85° relative to the longitudinal direction of the sleeve.

8. A connecting element according to any of the preceding claims, **characterized in that** the fibre material of the second layer (8,9) made of fiber composite material is composed of partial cross-windings or braid layers.

9. A connecting element according to claim 8, **characterized in that** the fibre angle of the winding layers or the braid layers, respectively, ranges from 45° to 89°.

10. A connecting element according to any of the preceding claims, **characterized in that**, at least in part of the region of the sleeve (1) in which no force introduction element (2) is provided, a compensation layer (11) is provided between the first layer (7) and the second layer (8,9) of fiber composite material.

11. A connecting element according to any of the preceding claims, **characterized in that** the sleeve (1) has an essentially cylindrical cross-sectional shape.

12. A connecting element according to any of the preceding claims, **characterized in that** the sleeve (1) consists of at least two parts mutually engageable in a non-positive way.

13. A connecting element according to claim 12, **characterized in that** the sleeve (1', 1") is divided in the plane of at least one of the raised portions of the force introduction elements (2' 2").

14. A process for the production of the connecting element according to any of the preceding claims, comprising the steps of:
- preparing a first layer of fibre material in the form of a sleeve on a core
- attaching at least one force introduction element at the periphery of the first layer
- coating at least part of the force introduction element and the first layer with a further layer of fibre material
- impregnating the obtained structure with resin, and
- curing
- demoulding the core.

## Revendications

1. Élément de liaison (1) pour induire des forces transversales en particulier dans des structures de charpentes sous la forme d'un manchon (1) applicable autour d'un élément longitudinal avec au moins un composant d'induction de forces de préférence métallique (2) agencé sur la périphérie du manchon, dans lequel le composant d'induction de forces (2) présente une section en relief (3) avec au moins un point de fixation (4) pour se lier à d'autres éléments et une section plate (5, 6) qui est adjacente à la section en relief dans la direction longitudinale du manchon et/ou dans la direction périphérique du manchon, **caractérisé en ce que** le manchon est formé sensiblement d'une première couche (7) de matériau renforcé de fibres et d'une seconde couche (8, 9) de matériau renforcé de fibres, qui revêt conjointement au moins une partie du composant d'induction de forces (2) et de la première couche de matériau renforcé de fibres (7) et relie donc le composant d'induction de forces (2) à la première couche (7).

2. Élément de liaison selon la revendication 1, **caractérisé en ce que** la seconde couche (8, 9) de matériau renforcé de fibres relie le composant d'induction de forces (2) à la première couche (7) de matériau renforcé de fibres au moins dans une zone partielle de la section plate (5, 6).

3. Élément de liaison selon la revendication 1 ou 2, **caractérisé en ce que** le composant d'induction de forces (2) présente des saillies en forme de broches (10) au moins dans une partie de la zone qui est reliée à la première couche (7) de matériau renforcé de fibres au moyen de la seconde couche (8, 9) de matériau renforcé de fibres, dans lequel les saillies en forme de broches dépassent au moins dans une couche (7, 8, 9) du matériau renforcé de fibres.

4. Élément de liaison selon la revendication 3, **caractérisé en ce que** les saillies en forme de broches (10) sont situées au moins dans une zone de la section plate (5, 6) et dépassent sur la face supérieure de la section plate (5, 6) dans la seconde couche du matériau renforcé de fibres (8, 9) ainsi que sur la face inférieure de la section plate (5, 6) dans la première couche (7) du matériau renforcé de fibres.

5. Élément de liaison selon l'une quelconque des revendications précédentes, **caractérisé en ce que** la section en relief (3) se présente sensiblement en forme de trapèze.

6. Élément de liaison selon l'une quelconque des revendications précédentes, **caractérisé en ce que** le matériau fibreux de la première couche de matériau renforcé de fibres (7) se présente sous la forme de couches tressées de fibres triaxiales.

7. Élément de liaison selon la revendication 6, **caractérisé en ce que** les couches tressées de fibres présentent des fibres avec un angle de tresse de sensiblement 0° par rapport à la direction longitudinale du manchon ainsi que des fibres avec un angle de tresse de 25° à 85° par rapport à la direction longitudinale du manchon.

8. Élément de liaison selon l'une quelconque des revendications précédentes, **caractérisé en ce que** le matériau fibreux de la seconde couche (8, 9) de matériau renforcé de fibres est constitué d'enroulements croisés ou de couches tressées partiels.

9. Élément de liaison selon la revendication 8, **caractérisé en ce que** l'angle des fibres des couches enroulées ou des couches tressées est de 45° à 89°.

10. Élément de liaison selon l'une quelconque des revendications précédentes, **caractérisé en ce qu'**il est prévu une couche de compensation (11) au moins dans une partie de la zone du manchon (1), dans laquelle il n'y a pas d'élément d'induction de forces (2), entre la première couche (7) et la seconde couche (8, 9) de matériau renforcé de fibres.

11. Élément de liaison selon l'une quelconque des revendications précédentes, **caractérisé en ce que** le manchon (1) présente une forme en coupe transversale sensiblement cylindrique.

12. Élément de liaison selon l'une quelconque des revendications précédentes, **caractérisé en ce que** le manchon (1) est constitué d'au moins deux parties qui peuvent être reliées l'une à l'autre mécaniquement.

13. Élément de liaison selon la revendication 12, **caractérisé en ce que** le manchon (1', 1") est divisé dans le plan d'au moins l'une des sections en relief de l'élément d'induction de forces (2', 2").

14. Procédé de fabrication de l'élément de liaison selon l'une quelconque des revendications précédentes, comprenant les étapes consistant à :
- fabriquer une première couche de matériau fibreux sous la forme d'un manchon sur un noyau,
- appliquer au moins un élément d'induction de forces sur la périphérie de la première couche,
- revêtir au moins une partie de l'élément d'induction de forces et de la première couche par une autre couche de matériau fibreux,
- imprégner la structure obtenue par de la résine et
- durcir,
- démouler le noyau.
